(19) Europäisches Patentamt
European Patent Office
Office européen des brevets

(11) **EP 1 233 198 B1**

(12) **EUROPÄISCHE PATENTSCHRIFT**

(45) Veröffentlichungstag und Bekanntmachung des Hinweises auf die Patenterteilung:
**14.03.2007 Patentblatt 2007/11**

(51) Int Cl.:
*F16C 33/10* *(2006.01)* *F16C 33/12* *(2006.01)*

(21) Anmeldenummer: **02003312.2**

(22) Anmeldetag: **13.02.2002**

(54) **Sintergleitlagereinheit**

Sintered plain bearing

Palier lisse fritté

(84) Benannte Vertragsstaaten:
**DE ES GB IT**

(30) Priorität: **15.02.2001 DE 10107486**

(43) Veröffentlichungstag der Anmeldung:
**21.08.2002 Patentblatt 2002/34**

(73) Patentinhaber:
• **ROBERT BOSCH GMBH**
  **70469 Stuttgart-Feuerbach (DE)**
• **KARL SIMON GmbH & Co. KG**
  **78733 Aichhalden (DE)**

(72) Erfinder:
• **Dornhöfer, Gerd, Dr.**
  **71229 Leonberg (DE)**
• **Vogt, Andreas, Dr.**
  **71272 Renningen (DE)**

• **Koch, Hans-Peter, Dr.**
  **70435 Stuttgart (DE)**
• **Kurz, Guido**
  **86853 Langerringen (DE)**
• **Stehr, Werner**
  **72160 Horb-Ahldorf (DE)**

(74) Vertreter: **Roth, Klaus et al**
**Patentanwälte**
**Eisele, Otten, Roth & Dobler,**
**Karlstrasse 8**
**88212 Ravensburg (DE)**

(56) Entgegenhaltungen:
**EP-A- 0 416 120** **DD-A- 280 149**
**GB-A- 495 824** **US-A- 3 110 085**
**US-A- 3 156 399**

EP 1 233 198 B1

**Beschreibung**

Die Erfindung betrifft eine Sintergleitlagereinheit nach dem Oberbegriff des Anspruchs 1 (siehe US 3,110,085).

Stand der Technik

Bislang sind Sintergleitlager beispielsweise für Motoren, Getriebe oder dergleichen gemäß der Offenlegungsschrift DE 199 37 567 bekannt, die längs einer Lagerbohrung abwechselnd hoch verdichtete, kleinporige Laufflächen und niedrig verdichtete, offenporige Zonen zur Schmierstoffzufuhr bzw. -abfuhr und/oder als Schmierstoffdepot aufweisen.

Bei entsprechenden Sintergleitlagern gemäß dem Stand der Technik weisen die Laufflächen im Betrieb eine sogenannte hydrodynamische Schmierung auf, wobei sich aufgrund des sich aufbauenden Druckes ein trennender Schmierstofffilm zwischen der Welle und dem Lager bildet. Im Bereich der offenporigen Zonen wird jedoch der Schmierstofffilm in die offenen Poren des Sintermaterials gepresst, so dass die Welle in diesen Bereichen im sogenannten Mischreibungszustand betrieben wird. In diesem Betriebszustand sind u.a. die Reibung als auch der Verschleiß des Lagers höher als beim hydrodynamischen Betrieb.

Nachteilig bei Sintergleitlagern mit konstanter Belastungsrichtung ist, dass diese abhängig von der Montage gegebenenfalls im Bereich der offenporigen Zonen belastet werden, was wenigstens teilweise zu einem Betrieb des Lagers im Mischreibungszustand führen kann.

Aufgabe und Vorteile der Erfindung

Aufgabe der Erfindung ist es demgegenüber eine Sintergleitlagereinheit vorzuschlagen, die einen Betrieb der Sintergleitlagereinheit im hydrodynamischen Betriebszustand gewährleistet.

Diese Aufgabe wird ausgehend von einer Sintergleitlagereinheit der einleitend genannten Art durch die kennzeichnenden Merkmale des Anspruchs 1 gelöst.

Durch die in den Ansprüchen 2 und 3 genannten Maßnahmen sind vorteilhafte Ausführungen und Weiterbildungen der Erfindung möglich.

Die erfindungsgemäße, einstellbare Laufzone gewährleistet einen hydrodynamischen Betrieb im Lastbereich des Sintergleitlagers. Hierdurch reduzieren sich Reibung und Verschleiß des Sintergleitlagers, so dass in vorteilhafter Weise die Eigenerwärmung und die Schmierstoffalterung während des Betriebs deutlich verringert werden kann und somit insbesondere die Lebensdauer des Lagers zunimmt.

Erfindungsgemäß bleibt die Ausgangsporosität des Sintergleitlagers außerhalb der erfindungsgemäßen Laufzone im Wesentlichen erhalten, so dass der vorteilhafte Schmierstoffaustausch zwischen Lager und Lagerspalt des Sintergleitlagers weiterhin erhalten bleibt und keine Mangelschmierung des Lagers auftreten kann.

In einer besonderen Weiterbildung der Erfindung ist wenigstens eine einstellbare Länge der Laufzone in Abhängigkeit der Belastungsstärke vorgesehen. Dies ermöglicht beispielsweise, dass mit zunehmender Belastungsstärke die Länge der Laufzone zunimmt, wodurch eine vorteilhafte Anpassung des Sintergleitlagers an die Belastungsstärke realisiert werden kann. Hierbei wird in vorteilhafter Weise der auf das Sintergleitlager wirkende Belastungsdruck auf eine vergleichsweise große Fläche verteilt, wodurch die Beanspruchung des Sintergleitlagers vermindert wird.

Nach der Erfindung weist die Laufzone wenigstens versiegelte, oberflächennahe Poren auf. Mittels dem erfindungsgemäßen Versiegeln der oberflächennahen Poren wird in vorteilhafter Weise die Ausbildung eines hydrodynamischen Schmierfilms im Betriebszustand ermöglicht, was zur erfindungsgemäßen Reduzierung der Reibung sowie des Verschleißes des Sintergleitlagers führt.

Nach der Erfindung wird gewährleistet, dass insbesondere das poröse Sintergleitlager erst im eingebauten Zustand nachträglich im Bereich der erfindungsgemäßen Laufzone mit dem Zusatzstoff entsprechend versiegelt werden kann. Mit dieser Maßnahme reduziert sich insbesondere der Montageaufwand des erfindungsgemäßen Sintergleitlagers, da dies unabhängig von der Belastungsrichtung während des Betriebs entsprechend eingebaut werden kann.

Gemäß der Erfindung umfasst wenigstens der Schmierstoff den Zusatzstoff zum Verschließen der oberflächennahen Poren der Laufzone des Sintergleitlagers. Hierdurch wird in vergleichsweise einfacher Weise die erfindungsgemäße von der Belastungsrichtung abhängige Lage der Laufzone dadurch realisiert, dass durch die in einer Einlaufphase im Mischreibungszustand auftretenden höheren Betriebstemperaturen beispielsweise der Zusatzstoff in die oberflächennahen Poren eindringen kann und gegebenenfalls in einer daran anschließenden Phase mit niedrigeren Temperaturen, insbesondere aufgrund eines chemischen Umwandlungsprozesses des Zusatzstoffes, das erfindungsgemäße Verschließen der oberflächennahen Poren erfolgt. In vorteilhafter Weise erfolgt die Temperaturerhöhung hierbei vor allem im Bereich der Laufzone, so dass insbesondere die erfindungsgemäße Lage der Laufzone ohne großen messtechnischen Aufwand und/oder auch Montageaufwand, die beispielsweise zur Ermittlung der tatsächlichen Belastungsrichtung des Sintergleitlagers im Betrieb notwendig wären, ermittelt und realisiert werden kann.

Das erfindungsgemäße Verschließen der oberflächennahen Poren mittels des Zusatzstoffes kann sowohl reversibel als auch irreversibel erfolgen. Vorteil der irreversiblen Versiegelung ist insbesondere, dass die erfindungsgemäße Laufzone unabhängig von späteren Temperaturänderungen im Bereich des Sintergleitlagers ist. Vorteil der reversiblen Variante ist dagegen, dass das erfindungsgemäße Sintergleitlager gegebenenfalls für einen anschließenden, neuen Anwendungsfall wiederverwertbar ist.

Nach der Erfindung umfasst eine Sintergleitlagereinheit wenigstens eine Belegung einer entsprechenden Welle oder Achse, wobei die Belegung zum Verschließen der oberflächennahen Poren der Laufbahn des Sintergleitlagers vorgesehen ist. Hierdurch wird gewährleistet, dass das erfindungsgemäße Verschließen der oberflächennahen Poren mit einem Zusatzstoff in vorteilhafter Weise mit einer entsprechend ausgebildeten Welle oder Achse realisierbar ist.

Die Belegung ist vorzugsweise als vergleichsweise weiche Zusatzschicht auf der Welle bzw. Achse ausgebildet und insbesondere wenigstens im Bereich des Sintergleitlagers vorgesehen. Beispielsweise erfolgt das Verschließen der oberflächennahen Poren aufgrund des Festkörperkontaktes, gegebenenfalls während einer Einlaufphase, zwischen Sintergleitlager und Welle bzw. Achse, wobei vorzugsweise ein Materialübertrag von der Welle bzw. Achse auf das Lager erfolgt. Hierdurch wird in vorteilhafter Weise ein vorgegebener Verschleiß der Welle bzw. Achse zur Erzeugung der erfindungsgemäßen Laufzone vorgesehen.

Vorteilhafterweise besteht die Belegung im Wesentlichen aus einem weichen Metall, Kunststoff oder dergleichen. Auch kann eine chemische Umformung der Belegung vorgesehen werden, wie z.B. ein Aushärten der Belegung nach Beendigung der Einlaufphase. In einer besonderen Weiterbildung der Erfindung entspricht das Volumen der Belegung nahezu dem Volumen der zu verschließenden Poren der erfindungsgemäßen Laufzone.

Vorteilhafterweise wird die Welle oder Achse zur Versiegelung der belastungsabhängigen Laufzone in einer Versiegelungsphase gegen die Betriebsdrehrichtung gedreht. Hierdurch wird gewährleistet, dass das Sintergleitlager in der Versiegelungsphase aufgrund der im Mischreibungszustand auftretenden Kräfte die Ausbildung der erfindungsgemäßen Laufzone dadurch ermöglicht, dass die Welle bzw. Achse im Mischreibungszustand mit gegensinniger Betriebsdrehrichtung die gleiche Lage im Sintergleitlager aufweist, wie die Welle bzw. Achse im hydrodynamischen Zustand mit entsprechender Betriebsdrehrichtung.

Grundsätzlich können auch stirn- oder umfangseitig angeordnete Schmierstoffdepots, insbesondere sackloch- und/oder rillenartige Schmierstoffdepots, angeordnet werden, die gegebenenfalls über einen oder mehrere Verbindungskanäle, die beispielsweise als Rillen, Nuten oder Bohrungen ausgebildet sind, mit wenigstens dem Lagerspalt, insbesondere mit der Laufzone, verbunden sind. Die Dimensionierung der Schmierstoffdepots und/oder der Verbindungskanäle erfolgt insbesondere in Abhängigkeit von kapillaren Eigenschaften des Schmierstoffs.

Ausführungsbeispiel

Ein Ausführungsbeispiel ist in der Zeichnung dargestellt und wird anhand der einzigen Figur näher erläutert, die einen schematischen Querschnitt eines erfindungsgemäßen Sintergleitlagers zeigt.

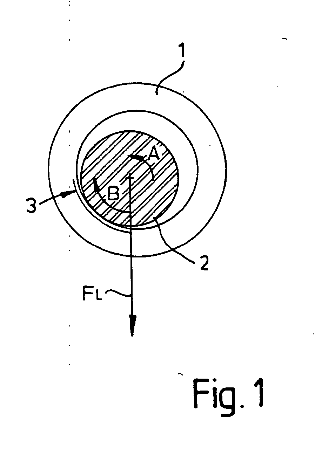

Ein erfindungsgemäßes Sintergleitlager 1 gemäß Fig. 1 weist eine Laufzone 3 auf, die im Lastbereich einer Welle 2 angeordnet ist. Die Einleitung einer Last $F_L$ erfolgt gemäß Fig. 1 senkrecht von oben. Im hydrodynamischen Betriebszustand stellt sich die Wellenposition bei einer Betriebsdrehrichtung B, d.h. bei einer Rotation im Uhrzeigersinn, etwas links unterhalb vom Lagermittelpunkt ein. Die erfindungsgemäße Ausbildung der Laufzone 3 muss gemäß Fig. 1 folglich im dritten Quadranten erfolgen. Hierfür wird in einer Versiegelungsphase die Welle 2 im Mischreibungszustand mit einer Einlaufdrehrichtung A betrieben, wodurch im entsprechenden Lastbereich des Sintergleitlagers 1, der der Laufzone 3 entspricht, aufgrund des vorhandenen Festkörperkontaktes der Welle 2 mit dem Sintergleitlager 1 eine Erwärmung der Laufzone 3 erzeugt wird, so dass beispielsweise mittels eines nicht näher dargestellten Zusatzstoffes die Poren im Bereich der Laufzone 3, beispielsweise mittels Aufschmelzen und anschließendem Erhärten des Zusatzstoffes, versiegelt werden.

Grundsätzlich kann das Versiegeln beziehungsweise Verschließen der Poren im Lastbereich, d.h. im Bereich der Laufzone 3, dadurch ermöglicht werden, dass im Betriebszustand der Mischreibung die Welle 2 und das Sintergleitlager 1 in direktem Kontakt zueinander stehen. Hierdurch können insbesondere zwei verschiedene Herstellungsvarianten zur Ausbildung der erfindungsgemäßen Laufzone 3 verwirklicht werden:

Einerseits kann aufgrund des Festkörperkontaktes zwischen Welle 2 und Sintergleitlager 1 durch Materialübertrag von der Welle 2 auf das Sintergleitlager 1 ein Verschließen der Poren in der Lagerbohrung erreicht werden, d.h. es kann ein gewollter Verschleiß der Welle 2 erzeugt werden. Hierzu ist auf der Welle 2 wenigstens im Bereich des Sintergleitlagers 1 eine relativ weiche Zusatzschicht aufzubringen, wobei das Material der Zusatzschicht beispielsweise ein weiches Metall oder ein Kunststoff sein könnte.

Vorzugsweise wird die Dicke der Zusatzschicht derart ausgewählt, dass mit dem Volumen der Zusatzschicht der Verschluss der oberflächennahen Poren in der Lastzone erreicht werden kann. Die Dicke kann hierbei beispielsweise entsprechend nachfolgenden Berechnungen ermittelt werden:

Das zu verschließende Lagersegment ist beispielsweise 90° lang, die Fläche $A_S$ dieses Segmentes berechnet sich zu

$$A_S \; = \; \pi/2 \; * \; r \; * \; B$$

wobei r: Lagerradius und
B: Breite des Lagers ist.

Die Tiefe, bis zu der die an der Oberfläche angrenzenden Poren gefüllt werden, sei t. Von dem Volumen $F_S$ = $A_S$ * t sind nur 10 bis 25 % zu füllen, insbesondere abhängig von der Verdichtungsstufe des Sintergleitlagers 1. Hierdurch ergibt sich das gesamte, benötigte Versiegelungsvolumen $V_V$ zu

$$V_V \; = \; A_S \; * \; t \; * \; 0,25$$

Dieses Volumen ist auf die Fläche $A_{WL}$ der Welle 2 aufzubringen, die sich innerhalb des Lagers 1 befindet

$$A_{WL} \; = \; 2\pi \; * \; r \; * \; B$$

Die Dicke der aufzubringenden Schicht $d_S$ ist dann

$$d_S \; = \; V_V \; / \; A_{WL} \; = \; (A_S \; * \; t \; * \; 0,25)/(2\pi \; * \; r \; * \; B)$$

beziehungsweise

$$d_S \; = \; (\pi/2 \; * \; r \; * \; B \; * \; t \; * \; 0,25)/(2\pi \; * \; r \; * \; B)$$

und somit ist

$$d_S \; = \; t/16$$

Hierbei ist beispielsweise t = 50 $\mu$m, so dass sich für die Dicke der Zusatzschicht auf der Welle 2 bei einer Porosität von 25 % ein Wert von maximal 3 $\mu$m ergibt.

Andererseits kann beispielsweise aufgrund der beim Festkörperkontakt auftretenden höheren Kontakttemperaturen die erfindungsgemäße Laufzone 3 dadurch erzeugt werden, dass eine chemische Reaktion eines Zusatzstoffes im Schmierstoff erfolgt, wodurch ein lokales Verschließen der oberflächennahen Poren im Bereich der Temperaturerhöhung realisiert wird, z.B. kann dies durch Aufschmelzen entsprechender Schmierstoffadditive und anschließendem Erhärten dieser in den oberflächennahen Poren der Laufzone 3 des Sintergleitlagers 1 verwirklicht werden.

Vorzugsweise werden erfindungsgemäße Sintergleitlager 1 mit einer in Umfangsrichtung homogenen Verteilung der Porengröße in der Lagerbohrung montiert. In der ersten Zeit nach der Betriebnahme der Sintergleitlager 1 wird in der Einlaufphase die erfindungsgemäße Laufzone 3 dadurch gebildet, dass vor allem die oberflächennahen Poren der Laufzone 3 verschlossen werden. Die Versiegelung der Poren im Bereich der Laufzone 3 ermöglicht im weiteren Betrieb des Sintergleitlagers 1 den Aufbau des vorteilhaften hydrodynamischen Schmierfilms. Außerhalb der Laufzone 3 bleibt die Ausgangsporosität des Sintergleitlagers 1 erhalten, so dass auch der Schmierstoffaustausch zwischen Sintergleitlager 1 und Lagerspalt erhalten bleibt und keine Mangelschmierung des Sintergleitlagers auftreten kann. Vorzugsweise wird das erfindungsgemäße Sintergleitlager 1 bei Lagern mit einer konstanten, radialen Belastungsrichtung vorgesehen, d.h. im Allgemeinen nicht bei Lagern mit umlaufenden Lasten.

Grundsätzlich ist das erfindungsgemäße Sintergleitlager 1 derart ausgebildet, dass es sich im Betrieb selbst modifiziert, so dass insbesondere ohne großen apparativen und/oder Montage-Aufwand eine erfindungsgemäße Laufzone 3 mit einem im Betrieb hydrodynamischen Schmierfilm realisiert werden kann.

Bezugszeichenliste:

1    Sintergleitlager
2    Welle
3    Laufzone

A    Einlaufdrehrichtung
B    Betriebsdrehrichtung
$F_L$    Last

**Patentansprüche**

**1.** Sintergleitlagereinheit mit einem poröses Sintermaterial umfassenden Sintergleitlager (1) mit wenigstens einer Laufzone (3) und einem Schmierstoff, wobei bei einen Belastung ($F_L$) des Sintergleitlagers (1) eine Laufzone (3) ausgebildet ist, die wenigstens eine von der Richtung der Belastung ($F_L$) abhängige Lage sowie eine im Vergleich zur sonstigen Lageroberfläche weniger Schmierstoff durchlässige Lauffläche sowie versiegelte, oberflächennahe Poren aufweist, und wobei wenigstens ein Zusatzstoff die oberflächennahen Poren verschließt, **dadurch gekennzeichnet, dass** die Laufzone wenigstens aus dem Zusatzstoff und dem Sintermaterial gebildet ist derart, dass der Schmierstoff den Zusatzstoff zum Verschließen der oberflächennahen Poren der Laufzone (3) des Sintergleitlagers (1) umfasst und/oder dass eine Welle (2) oder eine Achse eine als Zusatzstoff ausgebildete Belegung zum Verschließen der oberflächennahen Poren der Laufzone (3) des Sintergleitlagers (1) umfasst.

**2.** Sintergleitlagereinheit nach Anspruch 1, **dadurch gekennzeichnet, dass** wenigstens eine einstellbare Länge der Laufzone (3) in Abhängigkeit der Belastungsstärke vorgesehen ist.

**3.** Verfahren zur Herstellung eines Sintergleitlager (1) mit wenigstens einer Laufzone (3), **dadurch gekennzeichnet, dass** eine Sintergleitlagereinheit nach einem der vorgenannten Ansprüche verwendet wird, wobei die Welle (2) oder Achse zur Versiegelung der belastungsabhängigen Laufzone (3) in einer Versiegelungsphase gegen die Betriebsdrehrichtung gedreht wird.

**Claims**

**1.** Sintered plain bearing unit having a sintered plain bearing (1) which comprises a porous sintered material and has at least one running zone (3) and a lubricant, wherein in the event of a load ($F_L$) on the sintered plain bearing (1), a running zone (3) is formed which has at least one position which is dependent on the direction of the load ($F_L$), a running face which is less permeable to lubricant than the rest of the bearing surface, and sealed near-surface pores, wherein at least one additive closes off the near-surface pores, **characterized in that** the running zone is formed at least from the additive and the sintered material in such a way that the lubricant comprises the additive for closing off the near-surface pores of the running zone (3) of the sintered plain bearing (1) and/or **in that** a shaft (2) or an axle comprises a lining which is formed as the additive for closing off the near-surface pores of the running zone (3) of the sintered plain bearing (1).

**2.** Sintered plain bearing according to Claim 1, **characterized in that** at least one adjustable length of the running zone (3) is provided as a function of the load intensity.

**3.** Method for producing a sintered plain bearing (1) having at least one running zone (3), **characterized in that** a sintered plain bearing unit according to one of the preceding claims is used, wherein in a sealing phase, the shaft (2) or axle is rotated counter to the operational direction of rotation in order to seal the load-dependent running zone (3).

**Revendications**

1.  Unité de palier lisse fritté comprenant un palier lisse fritté (1) composé d'un matériau fritté poreux, avec au moins une zone de glissement (3) et un lubrifiant, dans lequel une charge ($F_L$) du palier lisse (1) forme la zone de glissement (3) dont la position dépend au moins de la direction de la charge ($F_L$) et qui présente une portée de glissement moins perméable au lubrifiant que le reste de la surface du palier, avec des pores vitrifiés proches de la surface et au moins un additif obturant ces pores,
    **caractérisée en ce que**
    la zone de glissement est constituée au moins de l'additif et du matériau fritté, de manière que le lubrifiant comprenne l'additif destiné à obturer les pores proches de la surface de la zone de glissement (3) du palier lisse fritté (1) et/ou qu'un arbre (2) ou un axe comprend un revêtement constitué de l'additif pour obturer les pores de la zone de glissement (3) proches de la surface de palier lisse fritté (1).

2.  Unité de palier lisse fritté selon la revendication 1,
    **caractérisée en ce qu'**
    au moins une longueur de la zone de glissement (3) est réglable en fonction de l'importance de la charge.

3.  Procédé de fabrication d'un palier lisse fritté (1) présentant au moins une zone de glissement (3),
    **caractérisée en ce qu'**
    on utilise une unité de palier lisse fritté selon l'une des revendications précédentes, et pour vitrifier la zone de glissement (3) dépendant de la charge, on fait tourner l'arbre (2) ou l'axe dans le sens contraire à celui en fonctionnement au cours d'une phase de vitrification.

Fig. 1